# EUROPÄISCHE PATENTSCHRIFT

(11) **EP 1 912 868 B1**
(45) Veröffentlichungstag und Bekanntmachung des Hinweises auf die Patenterteilung: **04.01.2012**
(21) Anmeldenummer: 06775756.7
(22) Anmeldetag: 27.07.2006
(51) Int. Cl.: B65D 53/02, B65D 43/02

(54) **AROMADICHTER BEHÄLTER**
ODOURPROOF CONTAINER
CONTENANT PRESERVANT LES AROMES

(30) Priorität: 29.07.2005 DE 102005035765
(43) Veröffentlichungstag der Anmeldung: 23.04.2008
(73) Patentinhaber: Jorgas, Manuela, 07422 Bad Blankenburg (DE)
(72) Erfinder: Bock, Mario, 07407 Rudolstadt (DE)
(74) Vertreter: Donath, Dirk
(86) Internationale Anmeldenummer: PCT/DE2006/001303
(87) Internationale Veröffentlichungsnummer: WO 2007/012318

(56) Entgegenhaltungen:
- JP-A- 2002 249 158
- US-A1- 2002 160 133

## Beschreibung

Die Erfindung betrifft einen aromadichten Behälter, insbesondere für Lebensmittel, mit einem Behälterdeckel, in dem eine elastische Dichtung angeordnet ist, die mindestens eine Dichtlippe aufweist, welche seitlich gegen die Behälterwandung im Bereich des Behälterrandes drückt.

Derartige Behälter sind insbesondere im Lebensmittelbereich bekannt, um Stoffe einerseits aromadicht zu lagern aber zugleich leicht zugänglich zu haben. Es soll also der Deckel schnell entfernbar und wieder aufsetzbar sein.

Frühere Behälter wie Einweckgläser mit druckbeaufschlagten Dichtungen benötigen Fixiereinrichtungen (z.B. Bügelscharniere oder Klappverschlüsse), welche den nötigen Dichtdruck aufbringen, die aber meist nur mit zwei Händen zu öffnen bzw. zu verschließen sind. Auch können die druckbeaufschlagten Dichtungen mit der Zeit plastisch verformen und/oder Risse bekommen und damit undicht werden.

Gattungsgemäße Dichtungen mit seitlich an der Behälterwand anliegenden Dichtlippen beseitigen diese Probleme und lassen sich leicht öffnen und wieder verschließen und verlieren normalerweise auch bei häufiger Benutzung nicht die Dichtwirkung.

Bei herkömmlichen aromadichten Behältern kann sich beim Verschlussvorgang ein im Raum oberhalb der Dichtlippe(n) liegendes Luftpolster ausbilden, das in Art einer Gasfederung eine Gegenkraft erzeugt, welche der Schließbewegung entgegenwirkt und dazu führen kann, dass sich der Behälterdeckel aus der vollständig geschlossenen Endstellung ein Stück zurück bewegt.

JP 2002 249 158 A offenbart einen aromadichten Behälter mit einem Behälterdeckel, in dem eine elastische Dichtung angeordnet ist, die mindestens eine Dichtlippe aufweist, welche seitlich gegen die Behälterwandung im Bereich des Behälterrandes drückt, wobei die Dichtung eine Struktur umfasst, die einen Ausgleichsraum ausbildet, der mit dem Innenraum des Behälters kommuniziert. Dabei ist unterhalb des Ausgleichsraumes die mindestens eine Dichtlippe angeordnet, wobei im Behälterdeckel eine Innenwand zur Bildung eines Dichtungsaufnahmeraumes ausgebildet ist, in dem die Dichtung eingesetzt ist. Aufgabe der Erfindung ist es daher, die oben dargestellten Probleme zu beseitigen und einen aromadichten Behälter bereitzustellen, der einfach zu öffnen und zu verschließen ist und beim Schließen nicht zurück federt.

Erfindungsgemäß wird diese Aufgabe durch die im Anspruch 1 genannten Merkmale gelöst. Vorteilhafte Weiterbildungen der Erfindung ergeben sich aus den Unteransprüchen.

Die erfindungsgemäße Merkmalskombination hat den Vorteil, dass durch den gebildeten Ausgleichsraum ein genügend großes Luftvolumen geschaffen wird, so dass durch den Schließvorgang der Druck oberhalb der Dichtlippe(n) praktisch nicht ansteigt und die unerwünschte "Federwirkung" entfällt.

Ein weiterer Vorteil ist, dass Flüssigkeiten, die beim Reinigungsvorgang (vor allem in einer Spülmaschine) in den Raum hinter der Dichtung eindringen, abfließen können.

Das Merkmal von Anspruch 1 ermöglicht einen kompakten Aufbau und einfache Fertigung mittels Spritzgießen.

Das Merkmal von Anspruch 2 ermöglicht eine einfache Ausbildung des Durchlasses und vereinfacht die Herstellung der Dichtung.

Das Merkmal von Anspruch 3 gewährleistet eine steife Struktur und verhindert eine zu große Nachgiebigkeit der Dichtung im Betrieb.

Das Merkmal von Anspruch 4 ermöglicht eine baulich einfache und zugleich steife Struktur.

Das Merkmal von Anspruch 5 ermöglicht in gleicher Weise wie Anspruch 2 eine einfache Ausbildung der Durchlässe und vereinfacht die Herstellung der Dichtung. Ein weiterer Vorteil, vor allem in Kombination mit dem Merkmal von Anspruch 6 ist, dass damit die freien Ränder der Stützrippen ähnlich wie Dichtlippen wirken und sich verformend an der Gegenwand anliegen können und damit die Dichtung in einem Ringraum fixieren.

Das Merkmal von Anspruch 7 ermöglicht eine kompakte und weitgehend inkompressible Struktur der Dichtung.

Zwei übereinander angeordnete Dichtlippen ermöglichen eine größere Dicht und Haltewirkung verglichen mit einer einzelnen Dichtlippe.

Dabei besteht die Dichtung aus Gummi oder Kunststoff.

Das Merkmal von Anspruch 8 schützt die Trennwand vor Beschädigungen beim falschen Aufsetzen des Deckels durch den Behältnisrand.

Das Merkmal von Anspruch 9 gewährleistet einen ausreichenden Druckausgleich bzw. eine ausreichende Abfließmöglichkeit für Wasser.

Die Erfindung wird nachfolgend anhand der beigefügten Zeichnungen weiter erläutert. Dabei zeigt:
- Fig. 1:: eine schematische Darstellung eines Behälters;
- Fig. 2:: eine Teilschnittansicht des Behälters von Fig. 1;
- Fig. 3:: eine perspektivische Ausschnittsdarstellung einer Dichtung;
- Fig. 4:: eine Detailansicht einer Stützrippe.

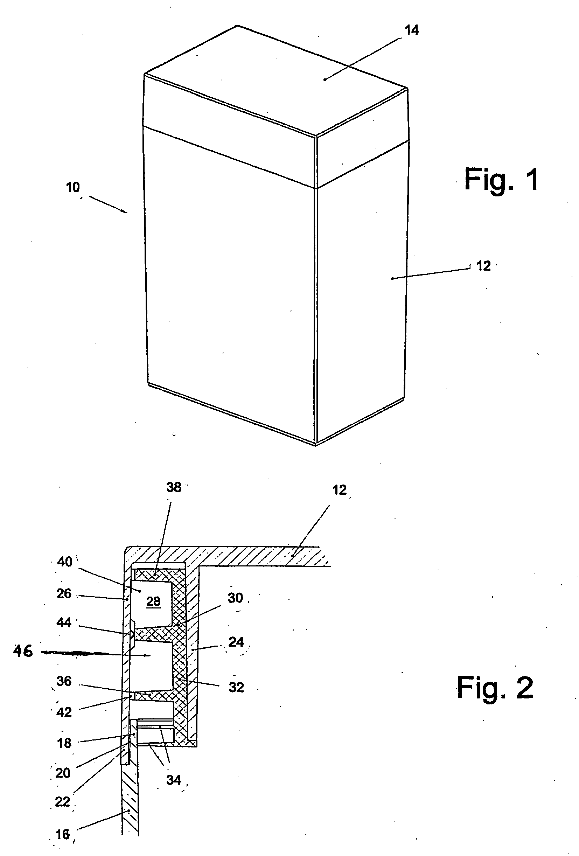

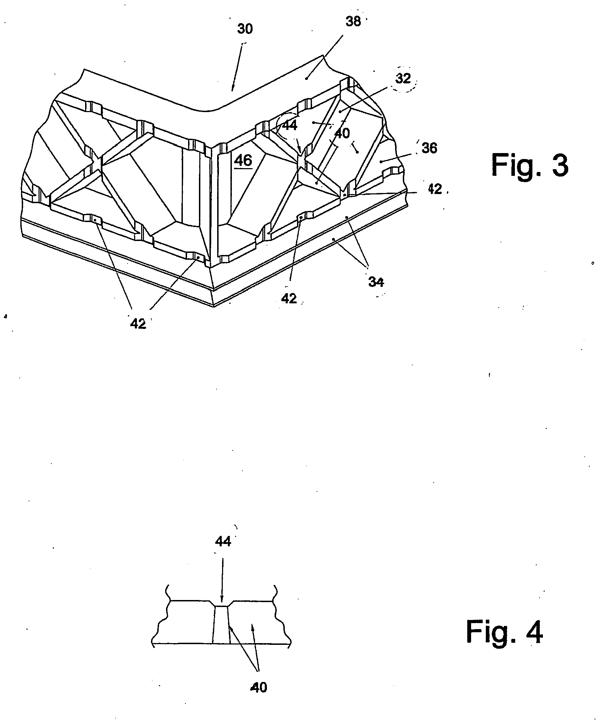

Der in den Figuren 1 bis 4 dargestellte Behälter 10 umfasst ein oben offenes Behältnis 12 sowie einen darauf aromadicht aufsetzbaren Deckel 14.

In Fig. 2 ist ein Ausschnitt des Behälters 10 geschnitten dargestellt. Die Wandung 16 des Behältnisses 12 weist im Bereich des oberen Randes 18 einen Absatz 20 auf, auf den der Rand 22 des Deckels 14 passgenau aufsetzt. Am Deckel 12 ist ferner eine Innenwand 24 angeformt, die zwischen sich und der Deckelwand 26 einen umlaufenden Dichtungsaufnahmeraum 28 definiert, in dem eine Dichtung 30 eingesetzt ist.

Diese Dichtung umfasst eine Stützwand 32, an deren unterem Ende zwei Dichtlippen 34 angeformt sind. Diese Dichtlippen 34 sind so gestaltet, dass diese dichtend an der Innenseite des Behältnisrandes 18 anliegen. Oberhalb der Dichtlippen 34 ist eine Trennwand 36 an der Stützwand 32 angeformt, die innenseitig an der Deckelwand 26 anliegt. Am oberen Ende der Stützwand 32 ist eine Endwand 38 angeformt.

Zwischen Trennwand 36 und Endwand 38 erstrecken sich kreuzartig Stützrippen 40.

In der Trennwand 36 sind regelmäßig beabstandet trapezförmige Vertiefungen 42 vorgesehen. In gleicher Weise sind an den Kreuzungspunkten der Stützrippen 40 Vertiefungen 44 vorgesehen.

Durch diese Vertiefungen 42 und 44 werden die zwischen Trennwand 36 und Endwand 38 sowie den Stützrippen 40 vorhandenen Räume miteinander sowie dem Äußeren verbunden und bilden auf diese Weise einen Ausgleichsraum 46, der beim Aufschieben des Deckels 14 auf den Behälter 12 das verdrängte Luftvolumen aufnimmt. Über diese Vertiefungen 42 und 44 kann ferner Wasser (z.B. nach einem Reinigungsvorgang) aus dem Ausgleichsraum 46 ablaufen.

## Patentansprüche

1. Aromadichter Behälter, insbesondere für Lebensmittel, mit einem Behälterdeckel (14), in dem eine elastische Dichtung (30) angeordnet ist, die mindestens eine Dichtlippe (34) aufweist, welche seitlich gegen die Behälterwandung (16) im Bereich des Behälterrandes (18) drückt, wobei die Dichtung (30) eine Struktur umfasst, die einen Ausgleichsraum (46) ausbildet, der mit dem Innenraum des Behälters (10) durch Luftdruck über die mindestens eine Dichtlippe (34) kommuniziert, wobei unterhalb des Ausgleichsraumes (46) die mindestens eine Dichtlippe (34) angeordnet ist und wobei im Behälterdeckel eine Innenwand (24) zur Bildung eines Dichtungsaufnahmeraumes (28) angeordnet ist, in dem die Dichtung eingesetzt ist, wobei die Dichtung (30) aus einer seitlichen Stützwand (32) besteht, von der von unten nach oben die mindestens eine Dichtlippe (34) angeformt ist **dadurch gekennzeichnet, dass** oberhalb davon eine Trennwand (36) an der Stützwand (32) angeformt ist, die innenseitig an einer Deckelwand (26) anliegt und mit mindestens einem Durchlass (42) angeformt ist, oberhalb der der Ausgleichsraum (46) gebildet ist.

2. Behälter nach Anspruch 1, **dadurch gekennzeichnet, dass** der Rand der Trennwand (36) mehrere Vertiefungen (42) zur Bildung der Durchlässe aufweist.

3. Behälter nach Anspruch 1, **dadurch gekennzeichnet, dass** der Ausgleichsraum (46) eine Struktur von Stützrippen (40) umfasst, die an der Stützwand (32) angeformt sind.

4. Behälter nach Anspruch 3, **dadurch gekennzeichnet, dass** die Stützrippen (40) kreuzweise angeordnet sind und an der Deckelwand (26) anliegen.

5. Behälter nach Anspruch 4, **dadurch gekennzeichnet, dass** die Ränder der Stützrippen (40) Vertiefungen (44) aufweisen.

6. Behälter nach Anspruch 5, **dadurch gekennzeichnet, dass** die Vertiefungen (44) in den Stützrippen (40) im Bereich der Kreuzungspunkte angeordnet sind.

7. Behälter nach Anspruch 1, **dadurch gekennzeichnet, dass** an der Dichtung (30) eine obere Endwand (38) parallel zur Trennwand (36) angeordnet ist, die mit den Stützrippen (40) verbunden ist.

8. Behälter nach Anspruch 1, **dadurch gekennzeichnet, dass** am Ende der seitlichen Stützwand (32) ein Absatz (48) angeformt ist, der über der Innenwand (24) liegt.

9. Behälter nach Anspruch 2, **dadurch gekennzeichnet, dass** 10 bis 30 Vertiefungen über dem Umfang etwa gleichmäßig verteilt sind.

## Claims

1. Odourproof container, particularly for food, with a container lid (14) in which an elastic seal (30) is arranged and provided with at least one sealing lip (43) that presses laterally against the container wall (16) in the area of the container edge (18), the sealing (30) comprises a structure that forms an equalizing space (46) communicating by means of air pressure via the at least one sealing lip (34) with the interior of the container (10), the at least one sealing lip (34) is located under the equalizing space (46) and in the lid of the container an interior wall (24) is arranged for forming a seal holding space (28) in which the sealing is inserted, and the sealing (30) consists of a lateral retaining wall (32) from which the at least one sealing lip (34) is molded from bottom to top, above it a dividing wall (36) is molded to the retaining wall (32), fits closely to a lid wall (26) at the inner side and is molded with at least one passage (42), and above said dividing wall (36) the equalizing space (46) is formed.

2. Container according to claim 1, wherein the edge of the dividing wall (36) is provided with several recesses (42) for forming the passages.

3. Container according to claim 1, wherein the equalizing space (46) comprises a structure of supporting ribs (40) that are molded to the retaining wall (32).

4. Container according to claim 3, wherein the supporting ribs (40) are arranged crosswise and fit closely to the lid wall (26).

5. Container according to claim 4, wherein the edges of the supporting ribs (40) are provided with recesses (44).

6. Container according to claim 5, wherein the recesses (44) are arranged in the supporting ribs (40) in the area of the crossing points.

7. Container according to claim 1, wherein at the sealing (30) an upper end wall (38) is arranged parallel to the dividing wall (36) and connected with the supporting ribs (40).

8. Container according to claim 1, wherein at the end of the lateral retaining wall (32) a shoulder (48) is formed to it that is positioned above the interior wall (24).

9. Container according to claim 2, wherein 10 to 30 recesses are almost evenly distributed along the circumference.

## Revendications

1. Récipient préservant les arômes, en particulier pour les produits alimentaires, avec un couvercle (14) muni d'un joint élastique (30), qui est prévu au moins d'une lèvre d'étanchéité (34), qui pousse latéralement contre la paroi du récipient (16) dans la zone du bord du récipient (18), le joint (30) comprenant une structure qui forme un compartiment de compensation (46), qui communique avec l'intérieur du récipient (10) par la pression d'air grâce à la au moins une lèvre d'étanchéité (34), la au moins une lèvre d'étanchéité (34) étant positionnée au-dessous du compartiment de compensation (46) et une paroi intérieur (24) se trouvant dans le couvercle du récipient pour former un compartiment récepteur du joint (28), dans lequel le joint est inséré, le joint (30) se formant d'une paroi porteuse latérale (32), de laquelle la au moins une lèvre d'étanchéité (34) est formée de bas en haut à la paroi porteuse (32), qui, sur la face intérieur, est en contact avec une paroi de couvercle (26) et au-dessus de laquelle une paroi de séparation (36) est formée avec au moins un évidement (42), au-dessus de laquelle le compartiment de compensation se forme (46).

2. Récipient suivant la revendication 1 est **caractérisé en ce que** le bord de la paroi de séparation (36) est prévu de plusieurs évidements (42) afin de former des passages.

3. Récipient suivant la revendication 1 est **caractérisé en ce que** le compartiment de compensation (46) comprend une structure des nervures-supports (40), qui sont formés sur la paroi porteuse (32).

4. Récipient suivant la revendication 3 est **caractérisé en ce que** les nervures-supports (40) sont arrangées croisées et sont en contact avec la paroi de couvercle (26).

5. Récipient suivant la revendication 4 est **caractérisé en ce que** les bords des nervures-supports (40) sont prévus des évidements (44).

6. Récipient suivant la revendication 5 est **caractérisé en ce que** les évidements (44) dans les nervures-supports (40) sont arrangés dans la zone des croisements.

7. Récipient suivant la revendication 1 est **caractérisé en ce qu'**une paroi d'extrémité supérieure (38) se trouve sur le joint (30) en parallèle à la paroi de séparation (36), qui est reliés avec les nervures-supports (40).

8. Récipient suivant la revendication 1 est **caractérisé en ce qu'**une saillie (48), qui se trouve sur la paroi intérieure (24), est formée à la fin de la paroi porteuse latérale (32).

9. Récipient suivant la revendication 2 est **caractérisé en ce que** 10 à 30 évidements sont répartis uniformément sur la circonférence.
